# FASCICULE DE BREVET EUROPEEN

(11) **EP 3 237 078 B1**
(45) Date de publication et mention de la délivrance du brevet: **12.06.2019**
(21) Numéro de dépôt: 15823651.3
(22) Date de dépôt: 14.12.2015
(51) Int. Cl.: A62B 35/00, A63B 29/02, F16B 45/02

(54) **MOUSQUETON D'ARRIMAGE DE SÉCURITÉ, SYSTÈME COMPRENANT DEUX MOUSQUETONS RELIÉS ENTRE EUX PAR UN DISPOSITIF DE TRANSMISSION ET ENSEMBLE COMPRENANT UN TEL MOUSQUETON**
SICHERHEITSVERANKERUNGSFEDERHAKEN, SYSTEM MIT ZWEI DURCH EINE GETRIEBEVORRICHTUNG VERBUNDENEN FEDERHAKEN UND ANORDNUNG MIT SOLCH EINEM FEDERHAKEN
SAFETY ANCHORING SPRING HOOK, SYSTEM COMPRISING TWO SPRING HOOKS INTERCONNECTED BY A TRANSMISSION DEVICE AND ASSEMBLY COMPRISING SUCH A SPRING HOOK

(30) Priorité: 22.12.2014 FR 1402984
(43) Date de publication de la demande: 01.11.2017
(73) Titulaire: Dehondt, Thierry Jean Alain Cornil, 51430 Tinqueux (FR)
(72) Inventeur: Dehondt, Thierry Jean Alain Cornil, 51430 Tinqueux (FR)
(74) Mandataire: Sayettat, Julien Christian
(86) Numéro de dépôt international: PCT/FR2015/053483
(87) Numéro de publication internationale: WO 2016/102808

(56) Documents cités:
- WO-A1-2012/062987
- WO-A1-2016/057609
- FR-A1- 2 319 047
- FR-A1- 2 972 358

## Description

L'invention concerne un mousqueton d'arrimage de sécurité pour une personne, un système comprenant deux mousquetons reliés entre eux par un dispositif de transmission et un ensemble comprenant au moins un tel mousqueton.

Il est connu de réaliser un mousqueton d'arrimage de sécurité pour une personne, ledit mousqueton comprenant :
- un crochet de réception d'un élément d'arrimage, ledit crochet présentant une partie de préhension et une partie de réception dudit élément, ladite partie de réception présentant une ouverture de passage dudit élément,
- une porte de fermeture de ladite ouverture.

L'élément d'arrimage est par exemple un câble, un barreau d'échelle ou encore une barre d'échafaudage.

Un tel mousqueton est notamment utilisable en vue de sécuriser des opérateurs de chantier travaillant en hauteur ou des personnes se livrant à des activités d'escalade, de « via ferrata » ou d'accrobranches.

Lorsque l'on dit que le mousqueton comprend une partie de préhension et une partie de réception, on entend que les parties sont distinctes l'une de l'autre, ladite partie de préhension n'étant pas intégrée, que ce soit partiellement ou en totalité, dans ladite partie de réception, comme ce peut être le cas pour des mousquetons présentant une forme générale en anneau.

Cependant, une telle réalisation présente divers inconvénients potentiels :
- il est difficile pour l'utilisateur de se suspendre à un mousqueton en se tenant à la partie de préhension, sauf en déployant une très grande force de serrage de ladite partie, ce qui n'est pas à la portée de tous les utilisateurs,
- les doigts tenant la partie de préhension ne sont pas protégés contre une agression par un objet extérieur,
- enfin, dans certaines réalisations, comme on le verra plus loin, la présence des doigts sur la partie de préhension peut constituer une gêne à la fermeture de la porte lorsqu'elle vient se plaquer contre ladite partie quand elle est ouverte.

Des mousquetons connus de l'art antérieur sont décrits par exemple dans les documents FR 2 972 358 A1, FR 2 319 047 A1, WO 2012/062987 A1 et WO 2016/057609 A1.

L'invention a pour but de pallier ces inconvénients.

A cet effet, et selon un premier aspect, l'invention propose un mousqueton d'arrimage de sécurité pour une personne selon la revendication 1.

On précise que, dans toute la description, sauf précision contraire, les termes de positionnement dans l'espace (supérieur, inférieur, dessous, bas, haut, vertical, latéral,...) sont pris en référence à un mousqueton en situation usuelle d'utilisation, ledit mousqueton étant suspendu à un élément d'arrimage et soumis uniquement à la force de gravité.

Avec l'agencement proposé :
- l'utilisateur peut aisément se suspendre à un mousqueton en se tenant à la partie de préhension, et ceci sans déployer une grande force de serrage de ladite partie, la main étant maintenue en place par sa mise en contact avec la périphérie de l'orifice,
- les doigts tenant la partie de préhension sont protégés contre une agression par un objet extérieur, ceci de par la présence de l'orifice dont une partie des parois s'étend sur au moins une partie des doigts,
- enfin, la présence des doigts sur la partie de préhension ne peut constituer une gêne à la fermeture de la porte.

Selon d'autres aspects, l'invention propose un système comprenant deux mousquetons reliés entre eux par un dispositif de transmission et un ensemble comprenant au moins un tel mousqueton.

D'autres particularités et avantages de l'invention apparaîtront dans la description qui suit, faite en référence aux figures jointes, dans lesquelles :
- les figures 1a et 1b sont des vues schématiques latérales d'un mousqueton selon une réalisation, la porte étant fermée (1a) et ouverte (1b).
- la figure 2 est une vue schématique en perspective d'un ensemble d'arrimage d'une personne comprenant un système comprenant deux mousquetons selon la figure 1.

En référence aux figures, on décrit un mousqueton 2a,2b d'arrimage de sécurité pour une personne, ledit mousqueton comprenant :
- un crochet 4 de réception d'un élément d'arrimage 3, ledit crochet présentant une partie de préhension 7 et une partie de réception 5 dudit élément, ladite partie de réception présentant une ouverture 6 de passage dudit élément,
- une porte 8 de fermeture de ladite ouverture,
ladite partie de préhension étant pourvue d'un orifice 30 d'introduction d'une main de ladite personne.

En particulier, le crochet 4 est monobloc, étant notamment à base de métal forgé, ce qui permet de garantir la robustesse de la partie de préhension 7.

Selon la réalisation représentée, la partie de préhension 7 est située en-dessous de la partie de réception 5.

Selon la réalisation représentée, le crochet 4 présente en vue latérale une forme générale en J renversé, la hampe du J formant partie inférieure de préhension 7 et la partie recourbée du J formant partie supérieure de réception 5, l'orifice 30 étant allongé verticalement.

Le fait de disposer d'un orifice 30 allongé verticalement procure une ergonomie optimale d'utilisation, la main de l'utilisateur étant en position induisant un minimum de fatigue.

De façon non représentée, il peut être prévu un capot de protection s'étendant latéralement par rapport à l'orifice 30 pour entourer au moins une partie des doigts de l'utilisateur non protégée par les parois dudit orifice.

Le capot de protection peut être sous forme d'une pièce associée au crochet 4, par exemple par des vis, ladite pièce pouvant être notamment en matériau plastique moulé de manière à présenter un faible poids, ou encore être issu de matière dudit crochet.

Selon l'invention, la porte 8 est montée en rotation sur le crochet 4.

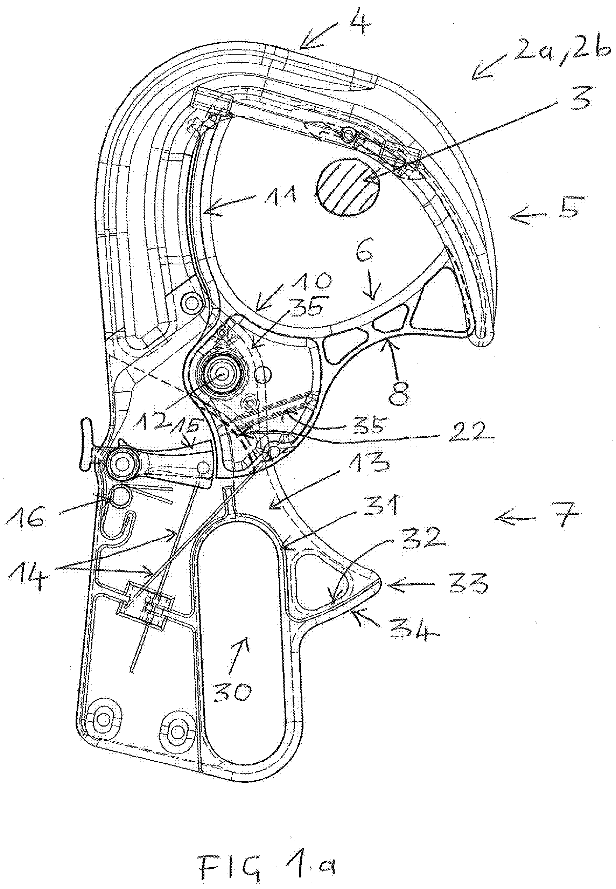

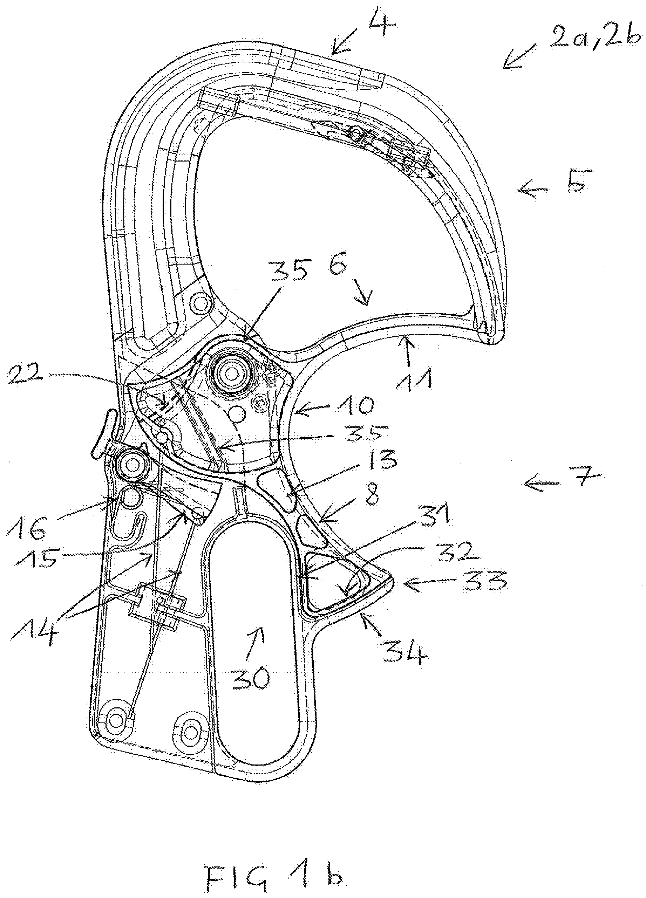

Selon l'invention, le mousqueton 2a,2b comprend un portillon 10 - ici en forme générale de C, ou en variante non représentée en forme générale de U ou de V - comprenant une première branche formant la porte 8 et une deuxième branche 11 d'actionnement de ladite porte, ledit portillon étant monté sur ledit crochet, à l'intersection entre lesdites branches, en rotation selon un axe de rotation 12 disposé entre la partie de préhension 7 et la partie de réception 5, de manière à pouvoir présenter d'une part une configuration angulaire de réception de l'élément 3 entre lesdites branches (figure 1b), où l'ouverture 6 est barrée par ladite deuxième branche, ladite configuration de réception permettant, par poussée exercée - notamment par ledit élément - sur ladite deuxième branche vers le haut, l'actionnement de ladite porte en fermeture, et d'autre part une configuration angulaire de maintien dudit élément dans ladite partie de réception entre lesdites branches (figure 1a), où ladite ouverture est barrée par ladite première branche.

Avec un tel agencement, la main de l'utilisateur, qui est insérée dans l'orifice 30, ne vient pas en interférence avec la première branche 8, lorsque le portillon 10 est actionné en rotation entre sa configuration de réception et sa configuration de maintien.

Selon la réalisation représentée, la partie de préhension 7 comprend une face de réception 31 en regard de laquelle s'étend la première branche 8 lorsque le portillon 10 est en configuration angulaire de réception, ladite face s'étendant sur tout ou partie - en l'occurrence en partie, selon la réalisation représentée - de la hauteur de ladite partie de préhension, de sorte que ladite branche ne forme pas une saillie gênante pour l'utilisateur quand ledit portillon est en configuration de réception.

Selon la réalisation représentée, la première branche 8, quand elle s'étend en regard de la face de réception 31, s'insère au moins partiellement dans un logement 13 de forme complémentaire prévu dans la partie de préhension 7.

Selon la réalisation représentée, le logement 13 est sous forme de cavité délimitée entre autres par la face 31 et par une paroi 32 intégrée à une saillie 33 disposée en bas de ladite face.

Selon la réalisation représentée, la saillie 33 présente un pan incliné 34 destiné à permettre le guidage de l'élément 3 entre les branches 8,11 du portillon 10 en configuration de réception lorsque le mousqueton 2 est positionné au-dessus dudit élément.

Selon une variante non représentée, et qui n'est pas couverte par l'invention, la porte 8 est montée en translation sur le crochet 4.

Selon une réalisation de cette variante, la partie de préhension 7 comprend un logement de réception de la porte 8 lorsqu'elle est escamotée pour libérer l'ouverture 6.

Avec un tel agencement, la porte 8, en particulier lorsqu'elle présente une longueur importante, par exemple de l'ordre de 60 mm, ne forme pas une saillie gênante lorsqu'elle est escamotée pour permettre l'insertion d'un élément 3 dans la partie de réception 5.

On précise ici que cette variante qui n'est pas couverte par l'invention concerne également un mousqueton 2a,2b d'arrimage de sécurité pour une personne, ledit mousqueton comprenant :
- un crochet 4 de réception d'un élément d'arrimage 3, ledit crochet présentant une partie de préhension 7 et une partie de réception 5 dudit élément, ladite partie de réception présentant une ouverture 6 de passage dudit élément,
- une porte 8 de fermeture de ladite ouverture, ladite porte étant montée en translation sur ledit crochet,
- la partie de préhension 7 comprend un logement de réception de la porte 8 lorsqu'elle est escamotée pour libérer l'ouverture 6, ladite partie de préhension étant dépourvue d'orifice d'introduction d'une main de ladite personne.

De la même façon, cette variante qui n'est pas couverte par l'invention concerne un tel mousqueton 2a,2b dont la partie de préhension 7 est située en-dessous de la partie de réception 5.

De la même façon, cette variante qui n'est pas couverte par l'invention concerne un tel mousqueton 2a,2b dont le crochet 4 présente en vue latérale une forme générale en J renversé, la hampe du J formant partie inférieure de préhension 7 et la partie recourbée du J formant partie supérieure de réception 5.

De la même façon, cette variante qui n'est pas couverte par l'invention concerne un tel mousqueton 2a,2b comprenant en outre un premier moyen de verrouillage de la porte 8 quand elle est fermée.

Enfin, cette variante qui n'est pas couverte par l'invention concerne également tout système 1 ou ensemble 25, tels que décrits plus loin, intégrant au moins un tel mousqueton 2a,2b dépourvu d'orifice 30.

Selon la réalisation représentée, le mousqueton 2a,2b comprend en outre un ressort 35 d'actionnement de la porte 8 en fermeture.

Selon la réalisation représentée, le mousqueton 2a,2b comprend en outre un premier moyen de verrouillage de la porte 8 quand elle est fermée.

Selon la réalisation représentée, le premier moyen de verrouillage comprend :
- un premier loquet 15 monté en rotation sur le crochet 4 entre une position de verrouillage et une position de déverrouillage,
- un premier ressort 16 activant ledit loquet vers sa position de verrouillage,
- une première dent 22, disposée sur ledit portillon, de réception dudit loquet en position de verrouillage.

On décrit à présent un système 1 d'arrimage de sécurité pour une personne comprenant un premier 2a et un deuxième 2b mousqueton et un dispositif de transmission 9 reliant lesdits mousquetons entre eux, ledit dispositif étant agencé de sorte que lorsque l'on passe :
- d'un état où lesdits mousquetons sont tous les deux arrimés à au moins un élément 3, leurs portes 8 étant fermées,
- à un état où la porte 8 dudit deuxième mousqueton est actionnée en ouverture en vue de son décrochage,
la porte 8 dudit premier mousqueton ne peut à son tour être actionnée en ouverture, ladite porte étant verrouillée par son premier moyen de verrouillage, de sorte qu'on ne peut pas passer d'un état où les deux mousquetons 2a,2b sont arrimés à un état où aucun desdits mousquetons n'est arrimé.

Le fait de disposer de deux mousquetons 2a,2b reliés par le dispositif de transmission 9 permet à l'utilisateur de passer d'un élément 3 d'arrimage à un autre en étant toujours en condition de sécurité, puisqu'on est toujours dans une situation où au moins un desdits mousquetons est accroché à un élément 3 d'arrimage.

Lorsqu'il est dit qu'on ne peut pas passer d'un état où les deux mousquetons 2a,2b sont arrimés à un état où aucun desdits mousquetons n'est arrimé, on fait référence à des conditions normalisées d'utilisation du système 1, c'est à dire sans avoir recours à un outil ou à une manoeuvre complexe en vue d'obtenir un déverrouillage d'urgence.

En effet, certains systèmes permettent le déverrouillage d'un mousqueton 2a,2b alors que l'autre mousqueton 2b,2a n'est pas arrimé, ledit déverrouillage se faisant au moyen d'un outil ou encore par actionnement d'un organe d'accès malaisé pour la main de l'utilisateur.

Selon la réalisation représentée, lorsque les mousquetons 2a,2b sont tous les deux arrimés à au moins un élément 3, l'actionnement en ouverture de la porte 8 d'un desdits mousquetons entraine une activation du premier moyen de verrouillage de l'autre desdits mousquetons.

Selon la réalisation représentée :
- chacun des mousquetons 2a,2b comprend un moyen de détection agencé pour pouvoir être activé par introduction d'un élément 3 dans le crochet 4,
- le premier moyen de verrouillage de chacun desdits mousquetons est couplé à un moyen de contrainte respectif - ici sous forme du premier ressort 16 - agencé pour l'activer lorsque la porte 8 est fermée,
- le dispositif de transmission 9 comprend deux moyens de transmission reliant respectivement le moyen de détection de chaque mousqueton 2a,2b au premier moyen de verrouillage de l'autre mousqueton 2b,2a, lesdits moyens de transmission étant agencés de sorte que l'activation du moyen de détection d'un desdits mousquetons, quel qu'il soit, entraîne la désactivation du premier moyen de verrouillage de l'autre desdits mousquetons.

Selon la réalisation représentée, la porte 8 constituant la première branche d'un portillon 10 tel que décrit ci-dessus, les moyens de transmission comprennent chacun un câble 14 coulissant dans une gaine - dénommé câble Bowden -, chacun desdits câbles étant relié de part et d'autre :
- à un portillon 10, à distance de son axe de rotation 12,
- et au premier moyen de verrouillage de l'autre portillon 10,
de sorte que la mise d'un portillon 10 en configuration angulaire de maintien - respectivement de réception - entraîne la désactivation - respectivement l'activation - du premier moyen de verrouillage de l'autre portillon 10.

Dans ce cas, le moyen de détection est formé par la deuxième branche 11 du portillon 10 qui se met en rotation sous l'action de la poussée de l'élément 3 sur ladite branche.

Selon une réalisation non représentée, dont le principe général est décrit dans le document EP-2 083 926 - A1, lorsqu'un premier mousqueton 2a est arrimé à un élément 3, sa porte 8 étant fermée et son premier moyen de verrouillage étant activé, l'arrimage du deuxième mousqueton 2b en fermant sa porte 8 et en le mettant en interaction avec un moyen de sécurité entraine une activation du premier moyen de verrouillage dudit deuxième mousqueton et une désactivation du premier moyen de verrouillage dudit premier mousqueton.

Selon une réalisation non représentée, dont le principe général est décrit dans le document EP-1 832 315- A1, la désactivation du premier moyen de verrouillage d'un premier mousqueton 2a entraine l'activation du premier moyen de verrouillage du deuxième mousqueton 2b.

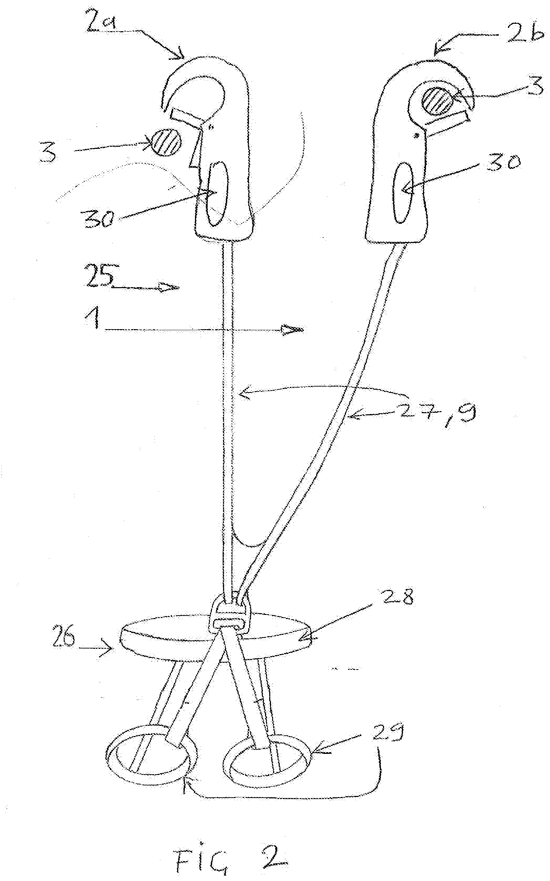

On décrit à présent, en référence à la figure 2, un ensemble 25 d'arrimage d'une personne comprenant un premier mousqueton 2a, ledit ensemble comprenant en outre un harnais 26 d'arrimage de ladite personne et un lien souple 27 de liaison dudit mousqueton audit harnais.

Le harnais 26 comprend en particulier une ceinture 28 et deux boucles 29 de passage des cuisses de l'utilisateur.

Selon la réalisation représentée, l'ensemble 1 comprend en outre un deuxième mousqueton 2b et un dispositif de transmission 9 reliant les deux mousquetons 2a ,2b de manière à former un système 1 tel que sus-décrit, lesdits mousquetons étant reliés au harnais 26 par deux liens souples 27 respectifs.

## Revendications

1. Mousqueton (2a,2b) d'arrimage de sécurité pour une personne, ledit mousqueton comprenant :
• un crochet (4) de réception d'un élément d'arrimage (3), ledit crochet présentant une partie de préhension (7) et une partie de réception (5) dudit élément, ladite partie de réception présentant une ouverture (6) de passage dudit élément, ladite partie de préhension étant pourvue d'un orifice (30) d'introduction d'une main de ladite personne,
• une porte (8) de fermeture de ladite ouverture, ladite porte étant montée en rotation sur le crochet (4),
ledit mousqueton comprenant un portillon (10) - notamment en forme générale de C, de U ou de V - comprenant une première branche formant la porte (8) et une deuxième branche (11) d'actionnement de ladite porte, ledit portillon étant monté sur ledit crochet, à l'intersection entre lesdites branches, en rotation selon un axe de rotation (12) disposé entre la partie de préhension (7) et la partie de réception (5), de manière à pouvoir présenter d'une part une configuration angulaire de réception de l'élément (3) entre lesdites branches, où l'ouverture (6) est barrée par ladite deuxième branche, ladite configuration de réception permettant, par poussée exercée - notamment par ledit élément - sur ladite deuxième branche vers le haut, l'actionnement de ladite porte en fermeture, et d'autre part une configuration angulaire de maintien dudit élément dans ladite partie de réception entre lesdites branches, où ladite ouverture est barrée par ladite première branche.

2. Mousqueton selon la revendication 1, **caractérisé en ce que** la partie de préhension (7) est située en-dessous de la partie de réception (5).

3. Mousqueton selon la revendication 2, **caractérisé en ce que** le crochet (4) présente en vue latérale une forme générale en J renversé, la hampe du J formant partie inférieure de préhension (7) et la partie recourbée du J formant partie supérieure de réception (5), l'orifice (30) étant allongé verticalement.

4. Mousqueton selon l'une quelconque des revendications 1 à 3, **caractérisé en ce qu'**il comprend en outre un premier moyen de verrouillage de la porte (8) quand elle est fermée.

5. Système (1) d'arrimage de sécurité pour une personne comprenant un premier (2a) et un deuxième (2b) mousqueton selon l'une quelconque des revendications 1 à 4 et un dispositif de transmission (9) reliant lesdits mousquetons entre eux, ledit dispositif étant agencé de sorte que lorsque l'on passe :
• d'un état où lesdits mousquetons sont tous les deux arrimés à au moins un élément (3), leurs portes (8) étant fermées,
• à un état où la porte (8) dudit deuxième mousqueton est actionnée en ouverture en vue de son décrochage,
la porte (8) dudit premier mousqueton ne peut à son tour être actionnée en ouverture, ladite porte étant verrouillée par son premier moyen de verrouillage, de sorte qu'on ne peut pas passer d'un état où les deux (2a,2b) mousquetons sont arrimés à un état où aucun desdits mousquetons n'est arrimé.

6. Système selon la revendication 5, **caractérisé en ce que**, lorsque les mousquetons (2a,2b) sont tous les deux arrimés à au moins un élément (3), l'actionnement en ouverture de la porte (8) d'un desdits mousquetons entraine une activation du premier moyen de verrouillage de l'autre desdits mousquetons.

7. Système selon la revendication 6, **caractérisé en ce que** :
• chacun des mousquetons (2a,2b) comprend un moyen de détection agencé pour pouvoir être activé par introduction d'un élément (3) dans le crochet (4),
• le premier moyen de verrouillage de chacun desdits mousquetons est couplé à un moyen de contrainte respectif agencé pour l'activer lorsque la porte (8) est fermée,
• le dispositif de transmission (9) comprend deux moyens de transmission reliant respectivement le moyen de détection de chaque mousqueton (2a,2b) au premier moyen de verrouillage de l'autre mousqueton (2b,2a), lesdits moyens de transmission étant agencés de sorte que l'activation du moyen de détection d'un desdits mousquetons, quel qu'il soit, entraîne la désactivation du premier moyen de verrouillage de l'autre desdits mousquetons.

8. Système selon la revendication 5, **caractérisé en ce que**, lorsqu'un premier mousqueton (2a) est arrimé à un élément (3), sa porte (8) étant fermée et son premier moyen de verrouillage étant activé, l'arrimage du deuxième mousqueton (2b) en fermant sa porte (8) et en le mettant en interaction avec un moyen de sécurité entraine une activation du premier moyen de verrouillage dudit deuxième mousqueton et une désactivation du premier moyen de verrouillage dudit premier mousqueton.

9. Système selon la revendication 5, **caractérisé en ce que** la désactivation du premier moyen de verrouillage d'un premier mousqueton (2a) entraine l'activation du premier moyen de verrouillage du deuxième mousqueton (2b).

10. Ensemble d'arrimage d'une personne **caractérisé en ce qu'**il comprend un premier mousqueton (2a) selon l'une quelconque des revendications 1 à 4, ledit ensemble comprenant en outre un harnais (26) d'arrimage de ladite personne et un lien souple (27) de liaison dudit mousqueton audit harnais.

11. Ensemble selon la revendication 10, **caractérisé en ce qu'**il comprend en outre un deuxième mousqueton (2b) et un dispositif de transmission (9) reliant les deux mousquetons (2a ,2b) de manière à former un système (1) selon l'une quelconque des revendications 5 à 9, lesdits mousquetons étant reliés au harnais (26) par deux liens souples (27) respectifs.

## Patentansprüche

1. Sicherheitsverankerungsfederhaken (2a, 2b) für eine Person, wobei der Federhaken umfasst:
- einen Empfangshaken (4) eines Verankerungselements (3), wobei der Haken einen Griffteil (7) und einen Empfangsteil (5) des Elements aufweist, wobei der Empfangsteil eine Durchgangsöffnung (6) des Elements aufweist, wobei der Griffteil mit einem Einführloch (30) einer Hand der Person versehen ist,
- eine Verschlusstür (8) der Öffnung, wobei die Tür rotierend auf dem Haken (4) angebracht ist,
wobei der Federhaken eine Sperre (10) - insbesondere in allgemeiner C-, U- oder V-Form - umfasst, umfassend einen ersten Schenkel, der die Tür (8) bildet, und einen zweiten Betätigungsschenkel (11) der Tür, wobei die Sperre auf dem Haken an der Schnittstelle zwischen den Schenkeln gemäß einer Rotationsachse (12), die zwischen dem Griffteil (7) und dem Empfangsteil (5) angeordnet ist, derart rotierend angebracht ist, dass sie zum einen eine winklige Empfangskonfiguration des Elements (3) zwischen den Schenkeln, in der die Öffnung (6) von dem zweiten Schenkel versperrt ist, wobei die Empfangskonfiguration, durch Druck, ausgeübt - insbesondere durch das Element - auf den zweiten Schenkel nach oben die schließende Betätigung der Tür erlaubt, und zum anderen eine winklige Haltekonfiguration des Elements im Empfangsteil zwischen den Schenkeln, in der die Öffnung von dem ersten Schenkel versperrt ist, aufweist.

2. Federhaken nach Anspruch 1, **dadurch gekennzeichnet, dass** sich der Griffteil (7) unterhalb des Empfangsteils (5) befindet.

3. Federhaken nach Anspruch 2, **dadurch gekennzeichnet, dass** der Haken (4) in der Seitenansicht eine allgemeine Form als umgekehrtes J aufweist, wobei der Schaft des J den unteren Griffteil (7) bildet und der gekrümmte Teil des J den oberen Empfangsteil (5) bildet, wobei das Loch (30) vertikal länglich ist.

4. Federhaken nach einem der Ansprüche 1 bis 3, **dadurch gekennzeichnet, dass** er ferner ein erstes Verriegelungsmittel der Tür (8) umfasst, wenn sie geschlossen ist.

5. Sicherheitsverankerungssystem (1) für eine Person, umfassend einen ersten (2a) und einen zweiten (2b) Federhaken nach einem der Ansprüche 1 bis 4 und eine Übertragungsvorrichtung (9), welche die Federhaken untereinander verbindet, wobei die Vorrichtung derart eingerichtet ist, dass, wenn man wechselt:
- von einem Zustand, in dem die Federhaken alle beide an mindestens einem Element (3) verankert sind, ihre Türen (8) geschlossen sind,
- in einen Zustand, in dem die Tür (8) des zweiten Federhakens zwecks seines Enthakens öffnend betätigt wird,
die Tür (8) des ersten Federhakens ihrerseits nicht öffnend betätigt werden kann, wobei die Tür durch ihr erstes Verriegelungsmittel derart verriegelt ist, dass man nicht von einem Zustand, in dem die zwei (2a, 2b) Federhaken verankert sind, in einen Zustand, in dem keiner der Federhaken verankert ist, wechseln kann.

6. System nach Anspruch 5, **dadurch gekennzeichnet, dass**, wenn die Federhaken (2a, 2b) alle beide an mindestens einem Element (3) verankert sind, die öffnende Betätigung der Tür (8) von einem der Federhaken eine Aktivierung des ersten Verriegelungsmittels des anderen der Federhaken bewirkt.

7. System nach Anspruch 6, **dadurch gekennzeichnet, dass**:
- jeder der Federhaken (2a, 2b) ein Detektionsmittel umfasst, das eingerichtet ist, um durch Einführen eines Elements (3) in den Haken (4) aktivierbar zu sein,
- das erste Verriegelungsmittel von jedem der Federhaken mit einem jeweiligen Spannmittel gekoppelt ist, das eingerichtet ist, um es zu aktivieren, wenn die Tür (8) geschlossen ist,
- die Übertragungsvorrichtung (9) zwei Übertragungsmittel umfasst, die jeweils das Detektionsmittel jedes Federhakens (2a, 2b) mit dem ersten Verriegelungsmittel des anderen Federhakens (2b, 2a) verbinden, wobei die Übertragungsmittel derart eingerichtet sind, dass die Aktivierung des Detektionsmittels von einem der Federhaken, egal von welchem, die Deaktivierung des ersten Verriegelungsmittels des anderen der Federhaken bewirkt.

8. System nach Anspruch 5, **dadurch gekennzeichnet, dass**, wenn ein erster Federhaken (2a) an einem Element (3) verankert ist, wobei seine Tür (8) geschlossen und sein erstes Verriegelungsmittel aktiviert ist, die Verankerung des zweiten Federhakens (2b) durch Schließen seiner Tür (8) und Versetzen in Interaktion mit einem Sicherheitsmittel eine Aktivierung des ersten Verriegelungsmittels des zweiten Federhakens und eine Deaktivierung des ersten Verriegelungsmittels des ersten Federhakens bewirkt.

9. System nach Anspruch 5, **dadurch gekennzeichnet, dass** die Deaktivierung des ersten Verriegelungsmittels eines ersten Federhakens (2a) die Aktivierung des ersten Verriegelungsmittels des zweiten Federhakens (2b) bewirkt.

10. Verankerungseinheit einer Person, **dadurch gekennzeichnet, dass** sie einen ersten Federhaken (2a) nach einem der Ansprüche 1 bis 4 umfasst, wobei die Einheit ferner ein Verankerungsgeschirr (26) der Person und eine elastische Verbindungsverbindung (27) des Federhakens mit dem Geschirr umfasst.

11. Einheit nach Anspruch 10, **dadurch gekennzeichnet, dass** sie ferner einen zweiten Federhaken (2b) und eine Übertragungsvorrichtung (9) umfasst, die die zwei Federhaken (2a, 2b) derart verbindet, dass ein System (1) nach einem der Ansprüche 5 bis 9 gebildet wird, wobei die Federhaken mit dem Geschirr (26) durch zwei jeweilige elastische Verbindungen (27) verbunden sind.

## Claims

1. Safety anchoring spring hook (2a, 2b) for a person, said spring hook comprising:
- a hook (4) for receiving an anchoring element (3), said hook having a gripping part (7) and a part (5) for receiving said element, said reception part having an opening (6) for passage of said element, said gripping part being provided with an orifice (30) for inserting a hand of said person,
- a door (8) for closing said opening, said door being mounted for rotation on the hook (4),
said spring hook comprising a gate (10) - in particular in the rough shape of a C, a U or a V - comprising a first arm forming the door (8) and a second arm (11) actuating said door, said gate being mounted on said hook, at the intersection between said arms, rotating on a rotation axis (12) disposed between the gripping part (7) and the reception part (5), so as to be able to have firstly an angular configuration for receiving the element (3) between said arms, where the opening (6) is barred by said second arm, said reception configuration allowing, by pushing exerted - in particular by said element - on said second arm upwards, the actuation of said door for closure, and secondly an angular configuration for holding said element in said reception part between said arms, where said opening is barred by said first arm.

2. Spring hook according to claim 1, **characterised in that** the gripping part (7) is situated underneath the reception part (5).

3. Spring hook according to claim 2, **characterised in that** the hook (4) has in side view the overall shape of an inverted J, the upright of the J forming the gripping bottom part (7) and the curved part of the J forming the reception top part (5), the orifice (30) being elongate vertically.

4. Spring hook according to any of claims 1 to 3, **characterised in that** it also comprises a first means for locking the door (8) when it is closed.

5. Safety anchoring system (1) for a person comprising a first (2a) and a second (2b) spring hook according to any of claims 1 to 4 and a transmission device (9) connecting said spring hooks together, said device being arranged so that, when passing:
- from a state wherein said spring hooks are both anchored to at least one element (3), their doors (8) being closed,
- to a state wherein the door (8) of said second spring hook is actuated for opening with a view to unhooking thereof,
the door (8) of said first spring hook cannot in its turn be actuated for opening, said door being locked by the first locking means thereof, so that it is not possible to pas from a state where the two (2a, 2b) spring hooks are anchored to a state where neither of said spring hooks is anchored.

6. System according to claim 5, **characterised in that**, when the spring hooks (2a, 2b) are both anchored to at least one element (3), the actuation for opening of the door (8) of one of said spring hooks causes an activation of the first locking means of the other one of said spring hooks.

7. System according to claim 6, **characterised in that**:
- each of the spring hooks (2a, 2b) comprises a detection means arranged to be able to be activated by the introduction of an element (3) into the hook (4),
- the first locking means of each of said spring hooks is coupled to a respective force means arranged to activate it when the door (8) is closed,
- the transmission device (9) comprises two transmission means respectively connecting the detection means of each spring hook (2a, 2b) to the first locking means of the other spring hook (2b, 2a), said transmission means being arranged so that the activation of the detection means of one of said spring hooks, no matter which, causes the deactivation of the first locking means of the other one of said spring hooks.

8. System according to claim 5, **characterised in that**, when a first spring hook (2a) is anchored to an element (3), the door (8) thereof being closed and the first locking means thereof being activated, the anchoring of the second spring hook (2b) by closing the door (8) thereof and putting it in interaction with a safety means causes activation of the first locking means of said second spring hook and deactivation of the first locking means of said first spring hook.

9. System according to claim 5, **characterised in that** the deactivation of the first locking means of a first spring hook (2a) causes activation of the first locking means of the second spring hook (2b).

10. Assembly for anchoring a person, **characterised in that** it comprises a first spring hook (2a) according to any of claims 1 to 4, said assembly further comprising a harness (26) for anchoring said person and a flexible link (27) for connecting said spring hook to said harness.

11. Assembly according to claim 10, **characterised in that** it further comprises a second spring hook (2b) and a transmission device (9) connecting the two spring hooks (2a, 2b) so as to form a system (1) according to any of claims 5 to 9, said spring hooks being connected to the harness (26) by two respective flexible links (27).
